# EUROPEAN PATENT SPECIFICATION

(11) **EP 2 384 645 B1**
(45) Date of publication and mention of the grant of the patent: **12.12.2012**
(21) Application number: 11165264.0
(22) Date of filing: 09.05.2011
(51) Int. Cl.: A23D 9/007

(54) **Process for preparing a frying oil**
Verfahren zur Herstellung eines Bratöls
Procédé de préparation d'une huile de friture

(30) Priority: 07.05.2010 EP 10162357
(43) Date of publication of application: 09.11.2011
(73) Proprietor: Vandemoortele Lipids NV, 9000 Gent (BE)
(72) Inventor: Rientjes, Gerhardus Johannes, 3890 ZA Zeewolde (NL)
(74) Representative: Zeestraten, Albertus W. J.

(56) References cited:
- EP-A2- 0 771 531
- GORDON, M. H.; MAGOS, P.: "The Effect of Sterols on the Oxidation of Edible Oils", FOOD CHEMISTRY, vol. 10, 1983, pages 141-157, XP002607024,
- WHITE, P. J.; ARMSTRONG, L. S.: "Effect of Selected Oat Sterols in the Deterioration of Heated Soybean Oil", JOURNAL OF THE AMERICAN OIL CHEMISTS' SOCIETY, vol. 63, no. 4, April 1986 (1986-04), pages 525-529, XP002607025,

## Description

### Technical Field

The invention concerns a process for preparing a frying oil with an improved resistance to oxidation and degradation.

### Background Art

EP 771531 discloses a mixture of oils, one of which is sesame oil. Optionally, a third oil, rich in Δ-5 avenosterol, such as rice bran oil, oat germ oil or wheat germ oil can be added. By rich in Δ-5 avenosterol is understood that the oil contains at least 50 mg/100 g oil, i.e. at least 500 mg/kg. Rice bran oil usually has a higher content of Δ-5 avenosterol, ranging from about 200 to 400 mg/100 g oil. A typical concentration is about 350 mg/100 g, i.e. 3500 mg/kg. For a rice bran oil having a typical concentration of Δ-5 avenosterol, the oil is added in a range of about 1.5 to about 4%. In an example an oil composition was tested comprising 94%wt of HOSO (high-oleic sunflower oil), 4%wt of dedicated sesame oil and 2%wt of rice bran oil. EP 771531 teaches the skilled person that the tests have been conducted with an oil composition having a Δ-5 avenosterol concentration of about 70 mg/kg. According to EP 771531 it is believed that rice bran oil, in particular with regard to the sterols contained in the oil, has stability-improving and/or anti-polymerisation activity.

A new frying oil has been introduced on the market, Diamant® Premium, which contains edible oils, more specifically high oleic sunflower oil and rice bran oil. It has been mentioned that this frying oil will last at least 100% longer than regular frying oils. However, a mere combination of said edible oils does not automatically lead to improved reduction to oxidation and degradation. Therefore there is a need to find a method to achieve a frying oil that will consistently have an improved resistance to oxidation and degradation.

### Disclosure of Invention

The invention accordingly provides a process for preparing a frying oil comprising two or more edible oils, wherein at least a first edible oil, or a mixture of said oils, comprises a monounsaturated fatty acid moiety, wherein at least a second edible oil, or a mixture of said oils, comprises delta-5-avenasterol and wherein the edible oils are analysed on the delta-5-avenasterol content and then blended at a ratio wherein the content of delta-5-avenasterol from the second edible oil, in the frying oil is achieved in the range of from 5-50 mg/kg.

Also claimed is an improved product, i.e., the product of the improved process that has a consistently improved resistance to oxidation and degradation.

### Modes for Carrying Out the Invention

Frying oils are typically made from vegetable edible oils. Typical oils include: palm oil, olive oil, peanut oil, rape seed oil, canola oil, sunflower oil, soybean oil, safflower oil and sesame oil.

According to the invention, the frying oil comprises at least a first edible oil, or a mixture of said oils, wherein said first edible oil comprises a monounsaturated fatty acid moiety, or a mixture of monounsaturated fatty acid moieties. Preferably, said first edible oil comprises at least 75 wt.-% of said monounsaturated oil. Moreover, said monounsaturated fatty acid moiety comprises 14 to 24 carbon atoms.

Advantageously, said first edible oil, or a mixture of said oils, is present in an amount of at least 85 wt.-%, based on the weight of the frying oil.

In Diamant® Premium rice bran oil is included, which is a vegetable oil that is rich in delta-5-avenasterol. Other delta-5-avenasterol-rich oils include: corn bran oil, sesame oil, wheat-germ oil, castor oil and linseed oil.

The content of delta-5-avenasterol varies per type of oil but may also vary depending on the source of oil within a given type.

The current inventors have discovered that the improved resistance to oxidation and degradation is the effect of a specific amount of delta-5-avenasterol from the second edible oil in the whole frying oil content. This is within the range of from 5 to 50, preferably 5 to 40, more preferably 5 to 28 mg/kg, most preferably from 5 to 25 mg/kg.

Due to this insight, the inventors have discovered that it is essential that the delta-5-avenasterol content in the individual components of the frying oil are known and that the components are blended at a ratio whereby a delta-5-avenasterol content from the second edible oil in the frying oil is achieved in the range of from 5-50 mg/kg.

Edible oils typically used in frying oils, i.e. the first edible oil, or mixtures of said oil, include: palm oil, olive oil, peanut oil, rape seed oil, canola oil, sunflower oil, soybean oil, safflower oil and sesame oil. More preferably, the first oil is sunflower oil. Sunflower oil is commonly used as edible oil. It is relatively odourless and has a neutral taste. No strong or deviating aromas are imparted on food products cooked with or fried in sunflower oil. Besides, sunflower oil is believed to have a beneficial effect on health.

The second edible oil, or a mixture of said oils, comprising delta-5-avenasterol-rich oil, may be chosen from the group consisting of rice bran oil, corn bran oil, wheat-germ oil, sesame oil, castor oil and linseed oil, or a mixture thereof. More preferably this oil is rice bran oil or corn bran oil, or a mixture of both.

The frying oil is preferable made from sunflower oil and rice bran oil. More preferably High Oleic Sunflower oil is used, e.g., having an oleic acid moiety content of 78-82 wt%, which is more stable under frying conditions and has a more neutral taste than ordinary sunflower oil or other vegetable oils.

It has been found that poly dimethyl siloxane, PDMS, has a profound effect on the stability and resistance to oxidation of the frying oils according to the present invention. It has been found that fewer oxidation products are formed during frying cycles when the frying oil contains PDMS. Therefore, the method of the present invention suitably employs frying oils whereto polydimethylsiloxane has been added. The frying oil of the present invention preferably comprises 1 to 20 mg PDMS per kg frying oil (equals 1 to 20 ppm PDMS, based on the total weight of the frying oil). A suitable PDMS is the polydimethylsiloxane that is known as the additive E900. Since excellent results are obtained by using the legally recommended maximum concentration of at most 10 ppm, the concentration of PDMS is preferably from 1 to 10 ppm, based on the total weight of the frying oil. Surprisingly, it has further been found that PDMS also reduces the absorption of frying oil into the fried products. The above effects of PDMS are very surprising since PDMS is commonly known as an anti-foam agent.

Accordingly, the present invention further describes a process which improves the oxidation resistance of a frying oil, comprising two or more edible oils, wherein at least a first edible oil, or a mixture of said oils, comprises a monounsaturated fatty acid moiety, wherein at least a second edible oil, or a mixture of said oils, comprises delta-5-avenasterol and wherein the content of delta-5-avenasterol from the at least second edible oil, in the frying oil is achieved in the range of from 5-50 mg/kg, in which process suitably poly dimethyl siloxane is added to at least one of the first edible oil, the second edible oil or the frying oil.

In addition to the vegetable oils it is common to add various additives such as flavouring agents and foam inhibitors to frying oils.

### Examples

Three different frying oils were prepared and tested. All the frying oils were based on high oleic sunflower oil. Comparative frying oil Formulation 1 contained about 90 %wt hi-oleic sunflower oil and about 10 %wt palm oil (both low in delta-5-avenasterol content). The content of delta-5-avenasterol was therefore negligible. In comparative Formulation 3, 10 %wt of a specific rice bran oil was used, with a delta-5-avenasterol content of about 540 mg/kg (based on the de-odorized rice bran oil) whereby the content of delta-5-avenasterol was greater than 50 mg/kg, viz. about 54 mg/kg. In Formulation 2, only 5 %wt of rice bran oil was used; in this case the total content was within the range of from 5-50 mg/kg, viz. about 27 ppm. Formulations 2 and 3 both contained a minor amount of PDMS (10 mg/kg).

The frying oils were used under conventional frying conditions and the weight of deposit on the chip pan and chip basket (also known as frying pan and frying basket) was determined after 23 turns. The amount of deposit for Formulations 1 and 3 were the same (about 3.0 grams), whereas the deposit for Formulation 2 was less than half (about 1.4 grams).

The experiment was repeated with corn bran oil (with a delta-5-avenasterol content of about 500 mg/kg), again in an amount of 10 %wt (Comparative Formulation 5) and 5 wt% (Formulation 4) and in the presence of a minor amount of PDMS (10 mg/kg). Formulation 4 had only 0.6 grams of deposit, whereas Comparative Formulation 5 has 3.4 grams of deposit on the chip pan and chip basket.

These experiments show that it is not merely enough to combine sunflower oil and a delta-5-avenasterol rich edible oil; the edible oils need to be blended in a suitable ratio in order to prepare a frying oil with improved resistance to oxidation and degradation.

## Claims

1. A process for preparing a frying oil comprising two or more edible oils, wherein at least a first edible oil, or a mixture of said oils, comprises a monounsaturated fatty acid moiety, wherein at least a second edible oil, or a mixture of said oils, comprises delta-5-avenasterol and wherein the edible oils are analysed on the delta-5-avenasterol content and then blended at a ratio wherein the content of delta-5-avenasterol from the second edible oil, in the frying oil is achieved in the range of from 5-50 mg/kg.

2. Process according to claim 1, wherein the first edible oil, or a mixture of said oils, comprises at least 75 wt.-% of said monounsaturated oil

3. Process according to claim 1 or 2, wherein said monounsaturated fatty acid moiety comprises 14-24 carbon atoms, based on the weight of the first edible oil, or the mixture of said oils.

4. Process according to claim 1 or 2, wherein the first edible oil, or a mixture of said oils, is present in an amount of at least 85%, based on the weight of the frying oil.

5. Process according to one of the preceding claims, wherein the first edible oil is selected from palm oil, olive oil, peanut oil, rape seed oil, canola oil, sunflower oil, soybean oil, safflower oil and sesame oil, or a mixture thereof.

6. Process according to claim 4, wherein the first edible oil is sunflower oil.

7. Process according to claim 5, wherein the sunflower oil comprises an oleic acid moiety in an amount of 78-82 wt.-%.

8. Process according to one of the preceding claims, wherein the second edible oil is selected from rice bran oil, corn bran oil, sesame oil, wheat-germ oil, castor oil and linseed oil.

9. Process according to claim 7, wherein the second edible oil is rice bran oil or corn bran oil.

10. Process according to one of the preceding claims wherein the delta-5-avenasterol content in the frying oil is in the range of from 5 to 40, preferably 5 to 28 mg/kg.

11. Process according to one of the preceding claims, wherein the frying oil further comprises poly dimethyl siloxane, preferably in a range of from 1-20 mg/kg, preferably from 1 to 10 mg/kg frying oil.

12. Process according to claim 11, wherein poly dimethyl siloxane is added to at least one of the first edible oil, the second edible oil or the frying oil.

13. Frying oil manufactured according to the process of one of the preceding claims 1-12.

## Patentansprüche

1. Verfahren zur Herstellung eines Frittieröls, das zwei oder mehr Speiseöle umfasst, wobei wenigstens ein erstes Speiseöl oder ein Gemisch der Öle einen einfach ungesättigten Fettsäureteil umfasst, wobei wenigstens ein zweites Speiseöl oder ein Gemisch der Öle delta-5-Avenasterol umfasst und wobei die Speiseöle auf den delta-5-Avenasterol-Gehalt analysiert werden und dann in einem solchen Verhältnis gemischt werden, dass ein Gehalt an delta-5-Avenasterol aus dem zweiten Speiseöl in dem Frittieröl im Bereich von 5 bis 50 mg/kg erreicht wird.

2. Verfahren gemäß Anspruch 1, wobei das erste Speiseöl oder ein Gemisch der Öle wenigstens 75 Gew.% des einfach ungesättigten Öls umfasst.

3. Verfahren gemäß Anspruch 1 oder 2, wobei der einfach ungesättigte Fettsäureteil 14 bis 24 Kohlenstoffatome, basierend auf dem Gewicht des ersten Speiseöls oder des Gemisches der Öle, umfasst.

4. Verfahren gemäß Anspruch 1 oder 2, wobei das erste Speiseöl oder ein Gemisch der Öle in einer Menge von wenigstens 85%, bezogen auf das Gewicht des Frittieröls, vorliegt.

5. Verfahren gemäß einem der vorangehenden Ansprüche, wobei das erste Speiseöl aus Palmöl, Olivenöl, Erdnussöl, Rapssamenöl, Canolaöl, Sonnenblumenöl, Sojabohnenöl, Safloröl und Sesamöl oder einem Gemisch davon ausgewählt wird.

6. Verfahren gemäß Anspruch 4, wobei das erste Speiseöl Sonnenblumenöl ist.

7. Verfahren gemäß Anspruch 5, wobei das Sonnenblumenöl einen Ölsäureteil in einer Menge von 78 bis 82 Gew.% umfasst.

8. Verfahren gemäß einem der vorangehenden Ansprüche, wobei das zweite Speiseöl ausgewählt ist aus Reiskleieöl, Maiskleieöl, Sesamöl, Weizenkeimöl, Rizinusöl und Leinsamenöl.

9. Verfahren gemäß Anspruch 7, wobei das zweite Speiseöl Reiskleieöl oder Maiskleieöl ist.

10. Verfahren gemäß einem der vorangehenden Ansprüche, wobei der delta-5-Avenasterol-Gehalt im Frittieröl im Bereich von 5 bis 40, vorzugsweise 5 bis 28 mg/kg liegt.

11. Verfahren gemäß einem der vorangehenden Ansprüche, wobei das Frittieröl außerdem Polydimethylsiloxan vorzugsweise in einem Bereich von 1 bis 20 mg/kg, vorzugsweise von 1 bis 10 mg/kg Frittieröl umfasst.

12. Verfahren gemäß Anspruch 11, wobei das Polydimethylsiloxan zu wenigstens einem aus dem ersten Speiseöl, dem zweiten Speiseöl oder dem Frittieröl gegeben wird.

13. Frittieröl, das nach dem Verfahren gemäß einem der Ansprüche 1 bis 12 hergestellt ist.

## Revendications

1. Processus pour préparer une huile de friture comprenant deux huiles alimentaires ou plus, dans lequel au moins une première huile alimentaire, ou un mélange desdites huiles, comprend un fragment d'acide gras mono insaturé, dans lequel au moins une deuxième huile alimentaire, ou un mélange desdites huiles, comprend du delta-5-avénastérol, et dans lequel les huiles alimentaires sont analysées concernant la teneur en delta-5-avénastérol et ensuite mélangées en un rapport dans lequel la teneur en delta-5-avénastérol de la deuxième huile alimentaire, dans l'huile de friture, dans la plage de 5 à 50 mg/kg est obtenue.

2. Processus selon la revendication 1, dans lequel la première huile alimentaire, ou un mélange desdites huiles, comprend au moins 75 % en poids de ladite huile mono insaturée.

3. Processus selon la revendication 1 ou 2, dans lequel ledit fragment d'acide gras mono insaturé comprend 14 à 24 atomes de carbone, sur la base du poids de la première huile alimentaire, ou du mélange desdites huiles.

4. Processus selon la revendication 1 ou 2, dans lequel la première huile alimentaire, ou un mélange desdites huiles, est présent en une quantité d'au moins 85 %, sur la base du poids de l'huile de friture.

5. Processus selon l'une des revendications précédentes, dans lequel la première huile alimentaire est sélectionnée parmi l'huile de palme, l'huile d'olive, l'huile d'arachide, l'huile de colza, l'huile de canola, l'huile de tournesol, l'huile de soja, l'huile de carthame et l'huile de sésame, ou un mélange de celles-ci.

6. Processus selon la revendication 4, dans lequel la première huile alimentaire est l'huile de tournesol.

7. Processus selon la revendication 5, dans lequel l'huile de tournesol comprend un fragment d'acide oléique en une quantité de 78 à 82 % en poids.

8. Processus selon l'une des revendications précédentes, dans lequel la deuxième huile alimentaire est sélectionnée parmi l'huile de son de riz, l'huile de son de maïs, l'huile de sésame, l'huile de germe de blé, l'huile de ricin et l'huile de lin.

9. Processus selon la revendication 7, dans lequel la deuxième huile alimentaire est l'huile de son de riz ou l'huile de son de maïs.

10. Processus selon l'une des revendications précédentes, dans lequel la teneur en delta-5-avénastérol dans l'huile de friture est dans la plage de 5 à 40, de préférence de 5 à 28 mg/kg.

11. Processus selon l'une des revendications précédentes, dans lequel l'huile de friture comprend en outre du poly diméthyle siloxane, de préférence dans une plage de 1 à 20 mg/kg, de préférence de 1 à 10 mg/kg d'huile de friture.

12. Processus selon la revendication 11, dans lequel du poly diméthyle siloxane est ajouté à au moins l'une de la première huile alimentaire, de la deuxième huile alimentaire ou de l'huile de friture.

13. Huile de friture produite selon le processus de l'une des revendications 1 à 12 précédentes.
